# EUROPEAN PATENT APPLICATION

(11) **EP 4 692 780 A1**
(43) Date of publication of application: **11.02.2026**
(21) Application number: 25193772.8
(22) Date of filing: 04.08.2025
(51) Int. Cl.: G01N 29/06, G01N 29/26, G01N 29/44, G06T 7/00

(54) **SYSTEM FOR AREA CLASSIFICATION AND METHOD THEREOF AND SYSTEM FOR DETECTING DEFECT AREA USING THE SAME**

(30) Priority: 05.08.2024 KR 20240103898
(71) Applicant: Doosan Enerbility Co., Ltd., Seongsan-gu Changwon-si, Gyeongsangnam-do 51711 (KR)
(72) Inventor: PARK, Gunghul, 06625 Seoul (KR); KIM, Yonghwa, 02001 Seoul (KR)
(74) Representative: Ter Meer Steinmeister & Partner

(57) **Abstract**

The present disclosure relates to a system and method for area classification and a defect detection system using the same. The system includes an input unit configured to receive an S-scan image from phased array ultrasonic testing (PAUT) using at least one probe; a conversion unit configured to detect at least one defective candidate using a pre-trained first model and convert the S-scan image into an original image; an extraction unit configured to acquire column data of the defective candidate, select representative data, extract at least one peak by overlapping the representative data in an index direction, and extract signal characteristics; and a classification unit configured to input the signal characteristics into a pre-trained second model to classify each defective candidate as a defective area or a diffuse reflection area.

## Description

This application claims the benefit of priority to Korean Patent Application No. 10-2024-0103898 filed on August, 05, 2024.

### BACKGROUND

### Technical Field

The present disclosure relates to a system for area classification and method thereof and system for detecting defect area using the same, and more specifically, to a system for area classification and method thereof, which receives an S-scan image through phased array ultrasonic testing (PAUT), applies the received image to a pre-trained classification model, and classifies the area into a defective area and a diffuse reflection area, and a system for detecting defect area using the same.

### Background Art

Ultrasonic testing is a method of detecting discontinuity in a test specimen by transmitting ultrasonic waves into the test specimen and is a method of measuring a position, size, etc. of a defect by comparing the amount of energy reflected from the discontinuity within the test specimen, a travel time of the transmitted ultrasonic waves to pass through a test object and be reflected back from the discontinuity, and a difference in attenuation when the ultrasonic waves pass through the test specimen with standard data.

Phased array ultrasonic testing (PAUT) is a testing technique that provides two-dimensional images in real time by allowing ultrasound waves with various amplitudes at various angles to pass through an object and is used to test complex geometric shapes in which testing is not easy using a single probe. In addition, the PAUT is composed of small, individual components in which each pulse can be separated and displays images that show a depth and position of an indicated value related to a probe in real time.

In the PAUT, an A-scan is a simple radio frequency (RF) waveform representation that shows the time and amplitude of an ultrasound signal, which indicates reflections from one sound beam position in a test specimen, and a B-scan shows a cross-sectional view of a test object through a vertical slice and shows the depth of a reflector with respect to a linear position.

In addition, a C-scan is a two-dimensional representation of data of a test object shown as a top view or plan view, a color of the C-scan represents an amplitude of a gate signal at each point of the test object mapped to an x-y position, and an S-scan refers to a sector scan generated when an ultrasonic beam is electronically swept through various angles using a phased array, and is typically represented as a sector scan image showing a two-dimensional cross-sectional view derived from a series of A-scans displayed in relation to time delay and refraction angle.

However, when using the S-scan, since the ultrasonic signal is received through multiple probes, there is a limitation that a diffuse reflection signal increases depending on the surface and material of the test object, and defect detection accuracy varies depending on the skill of the tester.

Accordingly, there is a need for a technology of quantitatively detecting and identifying a defective area and a diffuse reflection area for the S-scan image of the test object.

The background technology of the present disclosure is disclosed in Korean Patent Registration No. 10-2172361 (registered on October 30, 2020).

### SUMMARY OF THE DISCLOSURE

In this way, according to the present disclosure, there are provided a system for area classification and a method for area classification for receiving an S-scan image through phased array ultrasonic testing and classifying a defective area and a diffuse reflection area by applying the received image to a pre-trained classification model, and a system for detecting defect area using the same.

According to an embodiment of the present disclosure, there may be provided a system for area classification including an input unit configured to receive an S-scan image generated by phased array ultrasonic testing (PAUT) using at least one probe; a conversion unit configured to detect at least one defective candidate by inputting the S-scan image into a first trained model and to convert the S-scan image into an original image; an extraction unit configured to acquire column data of the at least one defective candidate from the original image, select representative data from the column data, extract at least one peak by overlapping the representative data in an index direction, and extract signal characteristics of the at least one peak; and a classification unit configured to classify each of the at least one defective candidate as a defective area or a diffuse reflection area by inputting the signal characteristics of each of the at least one peak to a second trained model.

The conversion unit may detect the at least one defective candidate by inputting the S-scan image to the first trained model. The conversion unit may mark the at least one defective candidate using a preset marking method. The conversion unit may map the detected at least one defective candidate into the original image using an angle constituting an S-scan in an original PAUT file.

The conversion unit may adjust a position of the at least one defective candidate by adjusting the original image.

The extraction unit may acquire the column data of the at least one defective candidate from the original image. The extraction unit may select the representative data among the column data.

The extraction unit may unit extracts the at least one peak by overlapping the representative data among the column data in the index direction. The extraction unit may extract the signal characteristics of the at least one peak.

The extraction unit may select one of a median value, a mean value, and a sum value of rows among the column data as the representative data.

The extraction unit may extract the at least one peak by overlapping the representative data of the column data at a position corresponding to each of the at least one defective candidate. The extraction unit may extract the signal characteristics of the at least one peak.

The column data may be data acquired in a direction passing through the at least one defective candidate as A-scan signal data.

The first model may be trained to output the at least one defective candidate upon receiving the S-scan image obtained by capturing a test object including a plurality of defects by a tester with a predetermined number of years of experience. The first model may be trained using the S-scan image and a defective candidate label matching the S-scan image as training data.

The second model may be trained to classify whether each of the at least one defective candidate corresponds to the defective area or the diffuse reflection area by determining whether the signal characteristics of each of the at least one extracted peak correspond to signal characteristics of either a defective area peak or a diffuse reflection area peak, using training data comprising signal characteristics of the at least one peak at a position along a Y-axis direction where each of the at least one defective candidate is present among overlapping representative data, the signal characteristics of the defective area peak, and the signal characteristics of the diffuse reflection area peak.

According to another embodiment of the present disclosure, a method is provided for area classification, comprising: receiving, by an input unit, an S-scan image generated by phased array ultrasonic testing (PAUT) using at least one probe; detecting, by a conversion unit, at least one defective candidate by inputting the S-scan image into a first trained model and converting the S-scan image into an original image; acquiring, by an extraction unit, column data of the at least one defective candidate from the original image, selecting representative data from the column data, extracting at least one peak by overlapping the representative data in an index direction, and extracting signal characteristics of the at least one peak; and classifying, by a classification unit, each of the at least one defective candidate as a defective area or a diffuse reflection area by inputting the signal characteristics of the at least one peak to a second trained model.

According to still another embodiment of the present disclosure, there may be provided a system for detecting defect area for detecting a defect of a test object using the method for area classification.

In this way, according to the present disclosure, since the defective area and the diffuse reflection area are identified based on the signal, it is possible to classify the defective area and the diffuse reflection area in a short time.

### BRIEF DESCRIPTION OF THE DRAWINGS

FIG. 1 is a block diagram of a system for area classification according to one embodiment of the present disclosure.
FIG. 2 is a flowchart of a method for area classification according to another embodiment of the present disclosure.
FIG. 3 is an exemplary view showing an example of indicating at least one defective candidate according to another embodiment of the present disclosure.
FIG. 4 is an exemplary view showing an example of converting into an original image according to another embodiment of the present disclosure.
FIG. 5 is an exemplary view showing an example of acquiring column data according to another embodiment of the present disclosure.
FIG. 6 is an exemplary view showing an example of selecting representative data according to another embodiment of the present disclosure.
FIG. 7 is an exemplary view showing an example of overlapping the representative data according to another embodiment of the present disclosure.

### DETAILED DESCRIPTION

Hereinafter, exemplary embodiments according to the present disclosure will be described in detail with reference to the accompanying drawings. In this description, thicknesses of lines, sizes of components, etc., shown in the drawings may be exaggerated for clarity and convenience of the description.

In addition, terms to be described below are the terms defined in consideration of functions in the present disclosure, which may vary depending on the intention or custom of a user or an operator. Accordingly, the definition of these terms should be made based on the contents throughout the specification.

In the embodiment to be described below, a system for area classification 100 classifies regions in the S-scan image into a defective area and a diffuse reflection area and will be described with a specific example. Accordingly, the present disclosure is not limited to these examples.

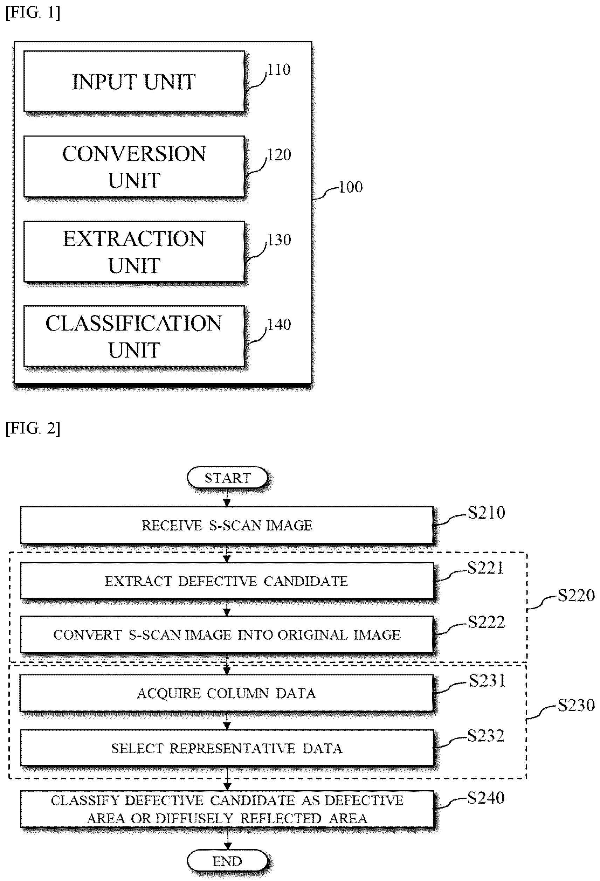

FIG. 1 is a block diagram of a system for area classification according to one embodiment of the present disclosure.

As shown in FIG. 1, the system for area classification 100 may include an input unit 110, a conversion unit 120, an extraction unit 130, and a classification unit 140.

First, the input unit 110 may receive an S-scan image generated by phased array ultrasonic testing (PAUT) using at least one probe.

Specifically, the input unit 110 may perform the PAUT on a test object through an angle (θ) that constitutes an S-scan using at least one probe and receive an S-scan image. In this case, the angle (θ) that constitutes the S-scan may be included in the S-scan image or in the original PAUT file data.

Next, the conversion unit 120 may detect at least one defective candidate by inputting the S-scan image into a first trained model and may convert the S-scan image into an original image. Here, the first trained model is trained to output a defective candidate upon receiving the S-scan image obtained by capturing a test object including a plurality of defects by a tester with a predetermined number of years of experience (e.g., 10 years) or more, and is trained using the S-scan image and a defective candidate label matching the S-scan image as training data.

Specifically, the conversion unit 120 may detect at least one defective candidate by inputting the S-scan image into the first trained model and mark and display the at least one defective candidate in a preset marking method (e.g., marking a defective candidate in a red rectangle).

In addition, the conversion unit 120 may convert the S-scan image in which the at least one defective candidate is marked in red rectangle into an original image using an angle (θ) that constitutes the S-scan in an original PAUT file.

That is, the conversion unit 120 may convert data in a straight direction passing through the angle (θ) constituting the S-scan included in the S-scan image into the original image.

In addition, the conversion unit 120 may adjust the original image to adjust a position of at least one defective candidate.

Here, while converting the S-scan image into the original image, the conversion unit 120 may adjust the position of the defective candidate by reconstructing the original image based on a vertex positioned at the top, vertices positioned at both sides, and vertices positioned at the bottom of the defective candidate marking method (e.g., a red rectangle) converted into a rhombus or diamond shape, and then reconstruct the defective candidate marking method converted into a rhombus or diamond shape back into the original form (the red rectangle).

Next, the extraction unit 130 may acquire column data of at least one defective candidate from the original image, select representative data from the acquired column data, extract at least one peak by overlapping the representative data in an index direction, and extract signal characteristics of the at least one peak.

Specifically, the extraction unit 130 may acquire the column data of the at least one defective candidate from the original image. In this case, the column data is A-scan signal data, which is the original data acquired through the PAUT.

In addition, the extraction unit 130 may store the acquired column data in a server (not shown) or a database (not shown).

In addition, the extraction unit 130 may select representative data from the acquired column data. Here, the representative data may be a preset data format, such as a median value, a mean value, a sum value, etc. of rows among the column data.

In addition, the extraction unit 130 may extract at least one peak by overlapping the representative data among the column data in the index direction and extract the signal characteristics of the at least one peak based on this.

Next, the classification unit 140 may classify whether each of the at least one defective candidate corresponds to a defective area or a diffuse reflection area by applying the signal characteristics of each of the at least one extracted peak to a second trained model. In this case, the second model is configured to classify whether each of the at least one defective candidate corresponds to the defective area or the diffuse reflection area by determining whether the signal characteristics of each of the at least one peak correspond to signal characteristics of either th defective area peak or the diffuse reflection area peak, using training data that includes signal characteristics of each of the at least one peak at a position along a Y-axis direction where each of the at least one defective candidate is present among overlapping representative data, the signal characteristics of a defective area peak, and the signal characteristics of a diffuse reflection area peak.

Hereinafter, the system for area classification will be described in more detail using FIGS. 2 to 7.

FIG. 2 is a flowchart of a method for area classification according to another embodiment of the present disclosure.

As shown in FIG. 2, the input unit 110 may receive the S-scan image generated from the PAUT using at least one probe (S210).

Specifically, the input unit 110 may receive the S-scan image captured by the PAUT using at least one probe on the test object wherein the S-scan image is obtained by capturing the test object including a plurality of defects by a tester with a predetermined number of years of experience (e.g., 10 years) or more.

Specifically, the input unit 110 may perform the PAUT on the test object using the angle (θ) that constitutes the S-scan using at least one probe and receive the S-scan image.

Next, the conversion unit 120 may detect at least one defective candidate R by inputting the S-scan image into the first trained model and convert the S-scan image into the original image (S220). Here, the first trained model is trained to output a defective candidate R upon receiving the S-scan image obtained by capturing a test object including a plurality of defects by a tester with a predetermined number of years of experience (e.g., 10 years) or more, and is trained using the S-scan image and a defective candidate label matching the S-scan image as training data.

Specifically, the conversion unit 120 may detect at least one defective candidate R by inputting the S-scan image into the first trained model and mark and display the at least one defective candidate R in a preset marking method (e.g., marking a defective candidate in a red rectangle) (S221).

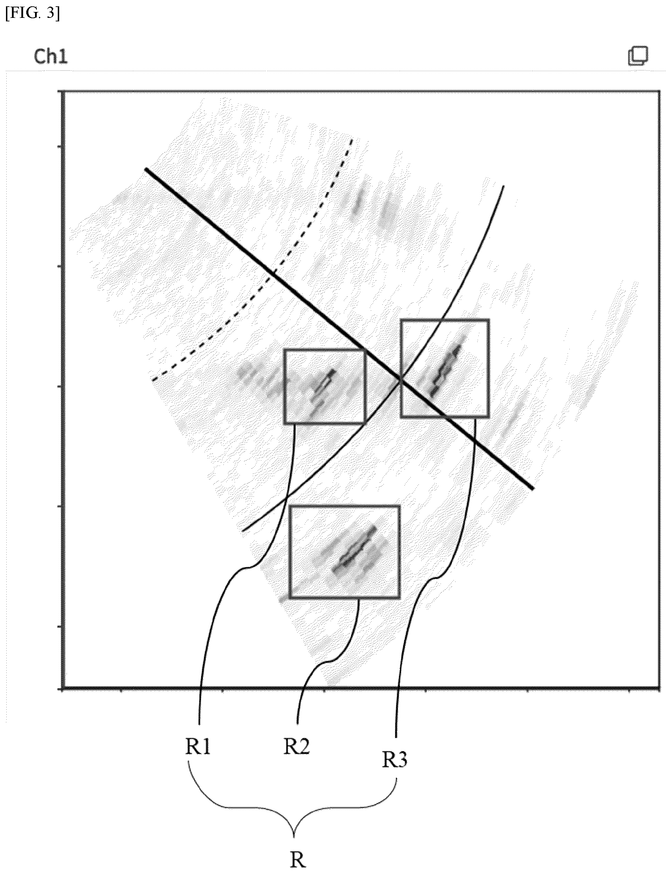

FIG. 3 is an exemplary view showing an example of indicating at least one defective candidate according to another embodiment of the present disclosure.

As shown in FIG. 3, the conversion unit 120 may detect three defective candidates R by applying the first trained model to the S-scan image, and additionally mark and display the size of the defective candidate R (e.g., 1.000, 0.948, etc.) on one side of the rectangle R1 R2 R3 positioned at the boundary of each of the three detected defective candidates R.

That is, the conversion unit 120 may detect at least one defective candidate by inputting the S-scan image into the first trained model and additionally mark and display the size of the defective candidate on one side of a rectangle R1 R2 R3 of a preset color positioned at the boundary of at least one detected defective candidate R.

In addition, the conversion unit 120 may convert the S-scan image in which the at least one defective candidate R is marked in red rectangle R1 R2 R3 into the original image using the angle (θ) constituting the S-scan in the original PAUT file (S222). In this case, the original image is an A-scan image.

That is, the conversion unit 120 may convert data in a straight direction passing through the angle (θ) constituting the S-scan included in the S-scan image into the original image.

In addition, the conversion unit 120 may adjust the original image to adjust a position of at least one defective candidate R.

Here, while converting the S-scan image into the original image, the conversion unit 120 may adjust the position of the defective candidate R by reconstructing the original image based on a vertex positioned at the top, vertices positioned at both sides, and vertices positioned at the bottom of the defective candidate marking method (e.g., a red rectangle) converted into a rhombus or diamond shape, and then reconstruct the defective candidate marking method converted into a rhombus or diamond shape back into the original form (the red rectangle).

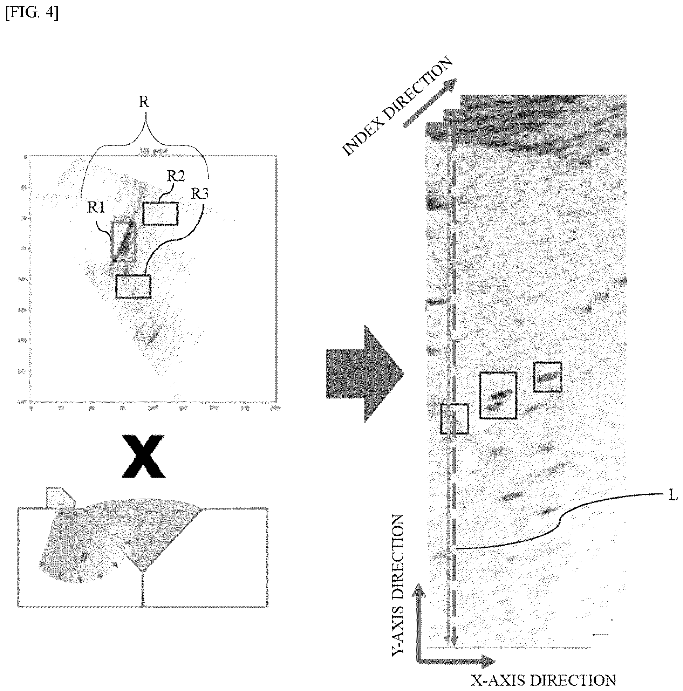

FIG. 4 is an exemplary view showing an example of converting into an original image according to another embodiment of the present disclosure.

As shown in FIG. 4, the conversion unit 120 may convert the S-scan image into the rectangular original image using the angle (θ), where the S-scan image using the angle is represented as the "X" mark in FIG. 4, constituting the S-scan in the original PAUT file, and adjust the positions of the defective candidate and the rectangles indicating the defective candidate by adjusting the original image.

Accordingly, the extraction unit 130 may acquire column data in a direction L (dotted arrow) passing through at least one defective candidate.

Next, the extraction unit 130 may acquire column data of at least one defective candidate from the original image, select representative data from the column data, extract at least one peak by overlapping the representative data in the index direction, and extract the signal characteristics of the at least one peak (S230).

Specifically, the extraction unit 130 may acquire the column data of the at least one defective candidate from the original image (S231). In this case, the column data is A-scan signal data.

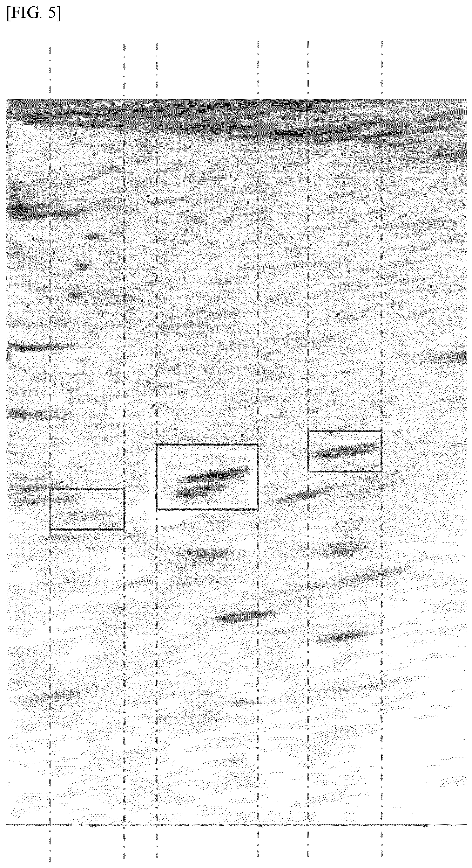

FIG. 5 is an exemplary view showing an example of acquiring the column data according to another embodiment of the present disclosure.

As shown in FIG. 5, the extraction unit 130 may acquire the column data by retrieving information about a column passing through at least one adjusted defective candidate (dotted arrow in FIG. 4).

In addition, the extraction unit 130 may store the acquired column data in a server (not shown) or a database (not shown).

In addition, the extraction unit 130 may select representative data from the column data (S232). Here, the representative data may be a preset data format, such as a median value, a mean value, a sum value, etc. of rows among the column data.

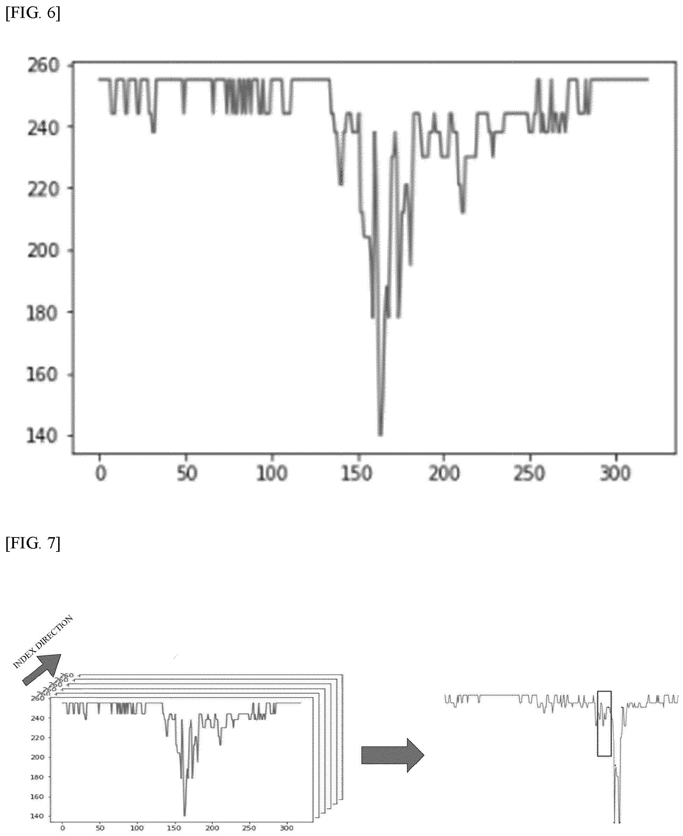

FIG. 6 is an exemplary view showing an example of selecting representative data according to another embodiment of the present disclosure.

As shown in FIG. 6, the extraction unit 130 may select representative data from the column data, collect representative data from the column data, and convert the representative data into one signal.

FIG. 7 is an exemplary view showing an example of overlapping the representative data according to another embodiment of the present disclosure.

As shown in FIG. 7, the extraction unit 130 may extract at least one peak by overlapping the representative data among the column data in the index direction (arrow with mark "index direction") and extract signal characteristics of the at least one peak.

In this case, the extraction unit 130 may overlap representative data from the column data at the same position as the column of the at least one defective candidate shown in FIG. 5.

Accordingly, the area classification system 100 may determine whether an area is a diffuse reflection area by checking for overlapping signals that differ from defective area signals, caused by the occurrence of a band-shaped signal resembling a defect in the index direction.

Next, the classification unit 140 may classify whether each of the at least one defective candidate corresponds to a defective area or a diffuse reflection area by applying the signal characteristics of each of the at least one extracted peak to a second trained model (S240). In this case, the second model is configured to classify whether each of the at least one defective candidate corresponds to the defective area or the diffuse reflection area by determining whether the signal characteristics of each of the at least one peak correspond to signal characteristics of either a defective area peak or a diffuse reflection area peak, using training data that includes signal characteristics of each of the at least one peak at a position along a Y-axis direction where each of the at least one defective candidate is present among overlapping representative data, the signal characteristics of a defective area peak, and the signal characteristics of a diffuse reflection area peak.

Specifically, the classification unit 140 may train the second model using the signal characteristics (the characteristics of the shape signal) representing the diffuse reflection area peak and the signal characteristics representing the defective area peak, and apply the signal characteristics of the peak of the at least one defective candidate to the second trained model to classify the at least one defective candidate as a defective area or a diffuse reflection area.

In addition, the system for detecting defect area (not shown) may detect a defect in a test object (not shown) based on the result determined to be a defective area using the system for area classification 100. Furthermore, the output of the second trained model may be used to control the at least one probe. For example, the output may control the at least one probe to change the angle that the ultrasonic beam is emitted.

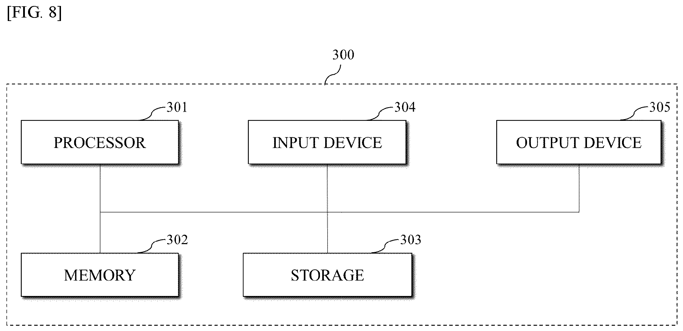

With reference to FIG. 8, system for area classification 100 may be implemented using one or more hardware components 300 including processors 301, memory 302, storage devices 303, input devices 304, output devices 305, and a communication bus 306. The processor 301 may include, but is not limited to, a central processing unit (CPU), a graphics processing unit (GPU), a digital signal processor (DSP), an application-specific integrated circuit (ASIC), or a field-programmable gate array (FPGA). The memory 302 may include volatile memory, such as random-access memory (RAM), and non-volatile memory, such as read-only memory (ROM), flash memory, or other persistent storage media. Storage devices 303 provide additional non-volatile storage capacity. Input devices 304 receive data or commands from users or external systems, and output devices 305 provide data or signals to users or other systems. The communication bus 306 facilitates data transfer and control signals among these hardware components. It will be understood that the units and modules described in the embodiments may be implemented using these hardware components, either by executing software instructions stored in memory 302 or storage 303, or by dedicated hardware circuits configured to perform specific functions.

According to the embodiment of the present disclosure, since the defective area and the diffuse reflection area may be determined based on a signal, the defective area and the diffuse reflection area can be classified in a short time.

Although the present disclosure has been described with reference to embodiments illustrated in the accompanying drawings, it is merely illustrative, and those skilled in the art to which the corresponding technology pertains will understand that various modifications and equivalent other embodiments are possible. Accordingly, the true technical scope of the present disclosure should be determined by the technical idea of the appended claims.

## Claims

1. A system for area classification comprising:
an input unit configured to receive an S-scan image generated by phased array ultrasonic testing (PAUT) using at least one probe;
a conversion unit configured to detect at least one defective candidate by inputting the S-scan image into a first trained model and to convert the S-scan image into an original image;
an extraction unit configured to acquire column data of the at least one defective candidate from the original image, select representative data from the column data, extract at least one peak by overlapping the representative data in an index direction, and extract signal characteristics of the at least one peak; and
a classification unit configured to classify each of the at least one defective candidate as a defective area or a diffuse reflection area by inputting the signal characteristics of each of the at least one peak to a second trained model.

2. The system for area classification of claim 1, wherein the conversion unit is configured to:
detect the at least one defective candidate by inputting the S-scan image to the first trained model and mark the at least one defective candidate using a preset marking method; and
adjust the detected at least one defective candidate in the original image based on an angle constituting an S-scan in an original PAUT file.

3. The system for area classification of claim 1 or 2, wherein the conversion unit adjusts a position of the at least one defective candidate by adjusting the original image.

4. The system for area classification according to any one of the preceding claims, wherein the extraction unit is configured to:
acquire the column data of the at least one defective candidate from the original image; and
select the representative data among the column data.

5. The system for area classification according to any one of the preceding claims, wherein the extraction unit extracts the at least one peak by overlapping the representative data among the column data in the index direction and extracts the signal characteristics of the at least one peak.

6. The system for area classification according to any one of the preceding claims, wherein the extraction unit selects one of a median value, a mean value, and a sum value of rows among the column data as the representative data.

7. The system for area classification according to any one of the preceding claims, wherein the extraction unit extracts the at least one peak by overlapping the representative data of the column data at a position corresponding to each of the at least one defective candidate and extracts the signal characteristics of the at least one peak.

8. The system for area classification according to any one of the preceding claims, wherein the column data is data acquired in a direction passing through the at least one defective candidate as A-scan signal data.

9. The system for area classification according to any one of the preceding claims, wherein the first trained model is trained to output the at least one defective candidate upon receiving the S-scan image obtained by capturing a test object including a plurality of defects by a tester with a predetermined number of years of experience, and is trained using the S-scan image and a defective candidate label matching the S-scan image as training data.

10. The system for area classification according to any one of the preceding claims, wherein the second trained model is trained to classify whether each of the at least one defective candidate corresponds to the defective area or the diffuse reflection area by determining whether the signal characteristics of each of the at least one extracted peak correspond to signal characteristics of either a defective area peak or a diffuse reflection area peak, using training data comprising signal characteristics of the at least one peak at a position along a Y-axis direction where each of the at least one defective candidate is present among overlapping representative data, the signal characteristics of the defective area peak, and the signal characteristics of the diffuse reflection area peak.

11. A method for area classification comprising:
receiving, by an input unit, an S-scan image generated by phased array ultrasonic testing (PAUT) using at least one probe;
detecting, by a conversion unit, at least one defective candidate by inputting the S-scan image into a first trained model and converting the S-scan image into an original image;
acquiring, by an extraction unit, column data of the at least one defective candidate from the original image, selecting representative data from the column data, extracting at least one peak by overlapping the representative data in an index direction, and extracting signal characteristics of the at least one peak; and
classifying, by a classification unit, each of the at least one defective candidate as a defective area or a diffuse reflection area by inputting the signal characteristics of the at least one peak to a second trained model.

12. The method for area classification of claim 11, wherein the converting of the S-scan image includes:
detecting the at least one defective candidate by inputting the S-scan image to the first trained model, and marking the at least one defective candidate using a preset marking method; and
adjusting the at least one defective candidate in an original image based on an angle constituting an S-scan in an original PAUT file.

13. The method for area classification of claim 11 or 12, wherein the converting of the S-scan image into the original image includes adjusting a position of the at least one defective candidate by adjusting the original image.

14. The method for area classification of claim 11, 12 or 13, wherein the extracting of the signal characteristics of the at least one peak includes:
acquiring the column data of the at least one defective candidate from the original image; and
selecting the representative data among the column data.
